# EUROPÄISCHE PATENTSCHRIFT

(11) **EP 3 642 131 B1**
(45) Veröffentlichungstag und Bekanntmachung des Hinweises auf die Patenterteilung: **25.08.2021**
(21) Anmeldenummer: 18788662.7
(22) Anmeldetag: 04.10.2018
(51) Int. Cl.: B65D 75/58

(54) **AUSGIESSER FÜR BEUTELVERPACKUNGEN**
POURING SPOUT FOR BAG PACKAGING
BEC VERSEUR POUR SACHETS D'EMBALLAGE

(30) Priorität: 13.10.2017 DE 102017009693
(43) Veröffentlichungstag der Anmeldung: 29.04.2020
(73) Patentinhaber: Georg Menshen GmbH & Co. KG, 57413 Finnentrop (DE)
(72) Erfinder: RÖMER, Frank, 57413 Finnentrop (DE)
(74) Vertreter: Cohausz Hannig Borkowski Wißgott
(86) Internationale Anmeldenummer: PCT/EP2018/000461
(87) Internationale Veröffentlichungsnummer: WO 2019/072409

(56) Entgegenhaltungen:
- JP-A- 2012 162 272
- US-A1- 2017 225 852

## Beschreibung

Die Erfindung betrifft einen im Spritzgussverfahren hergestellter ein Ausgießer für Beutelverpackungen mit einem inneren Ausgießkanal, der an seinem oberen Ende einen durch eine Kappe verschließbaren Ausgießstutzen aufweist und an seinem unteren Ende von einem schiffchenförmigen Einschweißteil umgeben ist, das schiffchenförmige Rippen aufweist, wobei zwischen den zueinander parallelen Rippen Zwischenräume bestehen und die Rippen den Ausgießkanal umgeben, wobei mindestens ein Anspritzpunkt außenseitig besteht, über den die Kunststoffschmelze eingedrückt wird, und wobei mit dem Kunststoffhauptmaterial ein zweites Kunststoffmaterial eingespritzt ist, das eine Sauerstoffbarriere bildet.

Ein solcher Ausgießer ist aus der US 2017/0225852 A1 bekannt. Bei Beutelverpackungen ist es für eine lange Haltbarkeit wichtig dafür zu sorgen, dass das vom Beutel umgebene Produkt (insb. Lebensmittel, Fruchtsaft oder Fruchtsäfte) nicht mit Sauerstoff in Berührung kommt. Damit durch das Folienmaterial des Beutels Sauerstoff nicht dringt, ist es bekannt die Folie aus einem Sauerstoff dämmenden Material herzustellen. Dagegen kann aber noch Sauerstoff durch den Kunststoff des Ausgießers in das Beutelinnere dringen. Ein ähnlicher Ausgießer ist zudem aus der JP 2012 162272 A bekannt.

Aufgabe der Erfindung ist es, einen Ausgießer der eingangs genannten Art so zu verbessern, dass ein Durchtreten von Sauerstoff durch das Kunststoffmaterial hindurch weitgehend verhindert wird und das zweite Material optimal verteilt wird.

Diese Aufgabe wird erfindungsgemäß dadurch gelöst, dass zwischen dem Ausgießstutzen und dem Einschweißteil eine waagerechte Abdeckplatte angeformt ist, die vom Ausgießkanal durchdrungen ist und an deren Außenrand der Anspritzpunkt angeordnet ist.

Damit befindet sich innerhalb des Kunststoff des Ausgießers eine schichtförmige Sauerstoffbarriere, die ein Eindringen von Sauerstoff über den Ausgießer verhindert. Die Herstellung eines solchen Ausgießers ist technisch einfach und führt zu keinem hohen Material- und Kostenaufwand. Durch die zwischen dem Ausgießstutzen und dem Einschweißteil angeordnete waagerechte Abdeckplatte wird eine optimale Verteilung des zweiten Materials erreicht.

Eine weitere Verbesserung des Eindringens des zweiten Materials geschieht auch dadurch, dass vom Anspritzpunkt mindestens ein insbesondere verdickter Verteilerkanal ausgeht, der in einem vom Anspritzpunkt entfernten Bereich des Ausgießers mündet. Hierbei kann mindestens ein Verteilerkanal innerhalb des Ausgießkanals verläuft. Auch ist von Vorteil, wenn mindestens ein Verteilerkanal an der Außenseite des Ausgießers verläuft.

Alternativ wird vorgeschlagen, dass mindestens eine Rippe eine solche Dicke aufweist, dass sie als Verteilerkanal dient.

Vorzugsweise ist das Kunststoffhauptmaterial ein Polypropylen oder ein Polyethylen und das die Sauerstoffbarriere bildende zweite Kunststoffmaterial ein Ethylen-Vinylalkohol-Copolymer oder ein Polyvinylalkohol.

Besonders vorteilhaft ist das Verfahren zum Herstellen eines Ausgießers, wenn zuerst das Kunststoffmaterial über den Anspritzpunkt eingespritzt wird, wobei das Kunststoffhauptmaterial sich zu zwei Seiten des Anspritzpunktes oder dem Ende des Verteilerkanals der Verteilerkanäle in zwei Bereiche im Formhohlraum verbreitet und dass sofort danach über denselben Anspritzpunkt das zweite Kunststoffhauptmaterial eingespritzt wird, das sich zwischen die zwei Bereiche des Kunststoffhauptmaterials legt und hierdurch die Sauerstoffbarriere zwischen den zwei Bereichen des Kunststoffhauptmaterials bildet.

Ausführungsbeispiele der Erfindung sind in den Zeichnungen dargestellt und werden im Folgenden näher beschrieben.

Es zeigen:
- Fig. 1:: eine Seitenansicht des Ausgießers,
- Fig. 2:: eine schräge Untenansicht des Ausgießers.

Der Ausgießer (Spout, Trinkstutzen, Einschweißteil) 1 wird im Spritzgussverfahren aus Kunststoff gefertigt und weist einen durch das gesamte Teil verlaufenden zylindrischen Ausgießkanal 2 auf, der im oberen Bereich von einem zylindrischen rohrförmigen Ausgießstutzen 3 und in seinen unteren Bereich von einem Einschweißteil 4 gebildet wird. Der oben Ausgießstutzen 3 besitzt an seiner Außenseite ein Außengewinde 5, so dass auf den Ausgießstutzen eine Verschlusskappe aufgeschraubt werden kann.

Das Einschweißteil 4 weist einem rohrförmigen Stutzen 6 auf, der den unteren Bereich des inneren Ausgießkanal 2 bildet, so dass die Stutzen 3 und 6 senkrecht und zueinander koaxial angeordnet sind. Am Stutzen 6 steht eine mittige senkrechte Trennfläche 7 beidseitig vor. Ferner sind am Stutzen 6 zu beiden Seiten der Trennfläche 7 waagerechte Rippen 8 angeformt, die an ihren Enden in die Trennfläche 7 auslaufen, so dass die in der selben waagerechten Ebene liegenden zwei Rippen 8 von oben gesehen linsenförmig bzw. schiffchenförmig sind, so dass das Einschweißteil 4 mit seinen Rippen und der Trennfläche 7 schiffchenförmig ist.

In dem Grenzbereich zwischen dem Ausgießstutzen 3 und dem Einschweißteil 4 ist eine waagerechte Abdeckplatte 9 an den Stutzen 3 und 6 angeformt, die von oben gesehen mehreckig insb. achteckig ist, die Rippen 8 seitlich überragt und eine größeren Dicke aufweist, als die der Rippen 8. An dem Außenrand der Abdeckplatte 9 befindet sich ein Anspritzpunkt 10. Durch das Einspritzen von Kunststoff über diesen Anspritzpunkt 10 ist ein schnelles und weit hineinreichendes Einspritzen des Kunststoffs in den Formhohlraum gewährleistet.

Über den Anspritzpunkt 10 wird zuerst das Kunststoffhauptmaterial eingespritzt, das vorzugsweise ein Polypropylen oder ein Polyethylen ist. Das Kunststoffhauptmaterial gelangt sofort in alle Bereiche des Formhohlraums und beginnt an den Außenseiten sofort fest zu werden. Die in den Hohlraum eingespritzten Menge des Kunststoffhauptmaterials ist aber etwas geringer gehalten, als die für das vollständige Ausfüllen des Hohlraumes erforderliche Kunststoffmenge. Sofort nach Beendigung des Einspritzen der Menge des Kunststoffhauptmaterials wird ein zweites Kunststoffmaterial vorzugsweise ein Ethylen-Vinylalkohol-Copolymer oder ein Polyvinylalkohol über den Anspritztpunkt 10 eingespritzt, das in den noch nicht fest gewordenen weichen Bereich des Kunststoffmaterials gelangt und dort eine in etwa waagerechte mittlere Barriereschicht über die Breite des Ausgießers zwischen dem oberen und unteren Bereich/Menge des Kunststoffhauptmaterials bildet. Hiernach ist der Formhohlraum vollständig mit Kunststoff ausgefüllt.

Nach dem vollständigen Ausfüllen des Formhohlraums wird noch eine kleine Menge Kunststoffhauptmaterials in den Anspritztpunkt 10 gespritzt, die den Anspritzpunkt verschließt.

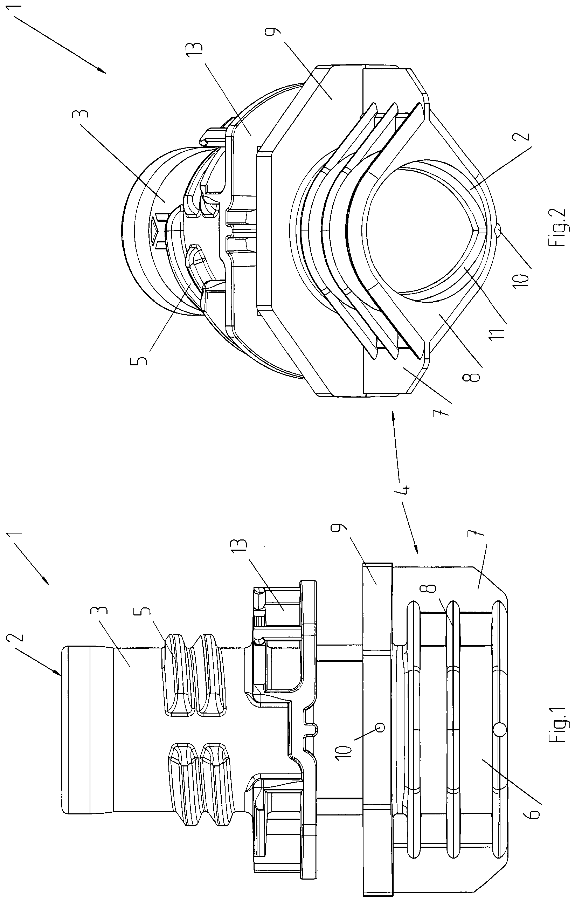

In einer weiteren Ausführung bildet die Spritzform mindestens einen vom Anspritzpunkt 10 ausgehenden verdickten Verteilerkanal 11. Zwei Verteilerkanäle 11 sind in Fig. 2 dargestellt. Hierbei kann der Anspritztpunkt 10 tief unten am Formhohlraum angeordnet sein, da der/die Verteilerkanäle 11 das Kunststoffhauptmaterial und das zweite Kunststoffmaterial weit nach oben führen. Dabei kann mindestens ein Verteilerkanal 11 innerhalb des Ausgießkanals 2 verlaufen und/oder mindestens ein Verteilerkanal 11 an der Außenseite des Ausgießers 1 verlaufen. Auch kann mindestens eine Rippe 8 eine solche Dicke aufweist, dass sie als Verteilerkanal 11 dient.

Vorzugsweise wird beiden Kunststoffhauptmaterialien oder zu mindestens einem der beiden Materialien ein Haftvermittler beigefügt.

In den Fig. 1 und 2 weist der Ausgießstutzen 3 zwischen dem Außengewinde 5 und der Abdeckplatte 9 außenseitig vorspringenden Teilen 13 auf, die zur Funktion der Verschlusskappe angeordnet sind als Einrast- oder Sicherungsmittel.

## Patentansprüche

1. Im Kunststoff-Spritzgussverfahren hergestellter Ausgießer (1) für Beutelverpackungen mit einem inneren Ausgießkanal (2), der an seinem oberen Ende einen durch eine Kappe verschließbaren Ausgießstutzen (3) aufweist und an seinem unteren Ende von einem schiffchenförmigen Einschweißteil (4) umgeben ist, das schiffchenförmige Rippen (8) aufweist, wobei zwischen den zueinander parallelen Rippen Zwischenräume bestehen und die Rippen (8) den Ausgießkanal umgeben, wobei zwischen dem Ausgiessstutzen (3) und dem Einschweissteil (4) ene waagerechte Abdeckplatte (9) angeformt ist, und wobei mit dem Kunststoffhauptmaterial ein zweites Kunststoffmaterial eingespritzt ist, das eine Sauerstoffbarriere bildet,
**dadurch gekennzeichnet, dass** mindestens ein Anspritzpunkt (10) aussenseitig besteht, über den Kunststoffschmelze eingedrückt wird und dass die Abdeckplatte (9) vom Ausgießkanal durchdrungen ist und an deren Außenrand der Anspritzpunkt (10) angeordnet ist.

2. Ausgießer nach Anspruch 1, **dadurch gekennzeichnet, dass** vom Anspritzpunkt (10) mindestens ein insbesondere verdickter Verteilerkanal (11) ausgeht, der in einem vom Anspritzpunkt entfernten Bereich des Ausgießers mündet.

3. Ausgießer nach Anspruch 2, **dadurch gekennzeichnet, dass** mindestens ein Verteilerkanal (11) innerhalb des Ausgießkanals (2) verläuft.

4. Ausgießer nach Anspruch 2 oder 3, **dadurch gekennzeichnet, dass** mindestens ein Verteilerkanal (11) an der Außenseite des Ausgießers (1) verläuft.

5. Ausgießer nach einem der vorherigen Ansprüche, **dadurch**
**gekennzeichnet, dass** mindestens eine Rippe (8) eine solche Dicke aufweist, dass sie als Verteilerkanal (11) dient.

6. Ausgießer nach einem der vorherigen Ansprüche, **dadurch**
**gekennzeichnet, dass** das Kunststoffhauptmaterial ein Polypropylen oder ein Polyethylen ist.

7. Ausgießer nach einem der vorherigen Ansprüche, **dadurch**
**gekennzeichnet, dass** das die Sauerstoffbarriere bildende zweite Kunststoffmaterial ein Ethylen-Vinylalkohol-Copolymer oder ein Polyvinylalkohol ist.

8. Verfahren zum Herstellen eines Ausgießers (1) im Spritzgussverfahren nach einem der vorherigen Ansprüche, **dadurch gekennzeichnet, dass** zuerst das Kunststoffhauptmaterial über den Anspritzpunkt (10) eingespritzt wird, wobei das Kunststoffhauptmaterial sich zu zwei Seiten des Anspritzpunktes oder dem Ende der Verteilerkanäle (11) in zwei Bereiche im Formhohlraum verbreitet und dass sofort danach über denselben Anspritzpunkt (10) das zweite Kunststoffmaterial eingespritzt wird, das sich zwischen die zwei Bereiche des Kunststoffhauptmaterials legt und hierdurch die Sauerstoffbarriere zwischen den zwei Bereichen des Kunststoffhauptmaterials bildet.

## Claims

1. Spout (1) which is produced by plastic injection moulding and is intended for bag packs, having an inner pouring channel (2) which, at its upper end, has a pouring connector (3) which can be closed by a cap and, at its lower end, is enclosed by a boat-shaped weld-in part (4) which has boat-shaped ribs (8), wherein there are interspaces between the ribs, which are parallel to one another, and the ribs (8) enclose the pouring channel, wherein a horizontal cover plate (9) is formed on between the pouring connector (3) and the weld-in part (4), and wherein a second plastic material, which forms an oxygen barrier, is injected along with the main plastic material,
**characterized in that** there is at least one gate (10) on the outer side, the plastic melt being forced in via said gate, and **in that** the cover plate (9) has the pouring channel passing through it and the gate (10) arranged on its outer edge.

2. Spout according to Claim 1, **characterized in that** at least one in particular thickened runner (11) extends from the gate (10), and it opens out in a spout region remote from the gate.

3. Spout according to Claim 2, **characterized in that** at least one runner (11) runs within the pouring channel (2).

4. Spout according to Claim 2 or 3, **characterized in that** at least one runner (11) runs on the outer side of the spout (1).

5. Spout according to one of the preceding claims, **characterized in that** at least one rib (8) is thick enough to be used as a runner (11).

6. Spout according to one of the preceding claims, **characterized in that** the main plastic material is a polypropylene or a polyethylene.

7. Spout according to one of the preceding claims, **characterized in that** the second plastic material, which forms the oxygen barrier, is an ethylene vinyl alcohol copolymer or a polyvinyl alcohol.

8. Method for producing a spout (1) by injection moulding according to one of the preceding claims, **characterized in that**, first of all, the main plastic material is injected via the gate (10), wherein the main plastic material spreads into two regions in the mould cavity on two sides of the gate, or at the end of the runners (11), and **in that**, immediately thereafter, the second plastic material is injected via the same gate (10), this second plastic material taking up position between the two regions of the main plastic material and thus forming the oxygen barrier between the two regions of the main plastic material.

## Revendications

1. Bec verseur (1) réalisé selon le procédé de moulage par injection de matière synthétique et destiné à des emballage en sachet, ledit bec verseur comprenant un canal de versement intérieur (2) qui comporte à son extrémité supérieure une tubulure de versement (3) qui peut être fermée par un capuchon et qui est entouré à son extrémité inférieure par une pièce à souder (4) en forme de nacelle qui comporte des nervures (8) en forme de nacelle, des espaces intermédiaires étant ménagés entre les nervures parallèles entre elles, et les nervures (8) entourant le canal de versement, une plaque de recouvrement horizontale (9) étant moulée entre le bec verseur (3) et la pièce à souder (4), et une deuxième matière synthétique qui forme une barrière à l'oxygène étant injectée avec la matière synthétique principale,
**caractérisé en ce qu'**il y a au moins un point d'injection (10) à l'extérieur, par lequel la matière plastique fondue est pressée et que la plaque de couverture (9) est traversée par le canal de coulée et le point d'injection (10) est disposé sur son bord extérieur.

2. Bec verseur selon la revendication 1, **caractérisé en ce qu'**au moins un canal de distribution (11), notamment épaissi, part du point d'injection (10) et débouche dans une région du bec verseur qui est éloignée du point d'injection.

3. Bec verseur selon la revendication 2, **caractérisé en ce qu'**au moins un canal de distribution (11) s'étend à l'intérieur du canal de versement (2).

4. Bec verseur selon la revendication 2 ou 3, **caractérisé en ce qu'**au moins un canal de distribution (11) s'étend du côté extérieur du bec verseur (1).

5. Bec verseur selon l'une des revendications précédentes, **caractérisé en ce qu'**au moins une nervure (8) a une épaisseur telle qu'elle sert de canal de distribution (11).

6. Bec verseur selon l'une des revendications précédentes, **caractérisé en ce que** la matière synthétique principale est un polypropylène ou un polyéthylène.

7. Bec verseur selon l'une des revendications précédentes, **caractérisé en ce que** la deuxième matière synthétique formant barrière à l'oxygène est un copolymère éthylène-alcool vinylique ou un alcool polyvinylique.

8. Procédé de fabrication d'un bec verseur (1) par moulage par injection selon l'une des revendications précédentes, **caractérisé en ce que** la matière synthétique principale est d'abord injectée par le biais du point d'injection (10), la matière synthétique principale s'élargissant en direction des deux côtés du point d'injection ou de l'extrémité des canaux de distribution (11) dans deux régions de la cavité du moule et **en ce qu'**immédiatement après la deuxième matière synthétique est injectée par le biais du même point d'injection (10) et va se déposer entre les deux zones de la matière synthétique principale et forme ainsi la barrière à l'oxygène entre les deux zones de la matière synthétique principale.
